# EUROPÄISCHE PATENTSCHRIFT

(11) **EP 0 640 116 B1**
(45) Veröffentlichungstag und Bekanntmachung des Hinweises auf die Patenterteilung: **12.02.1997**
(21) Anmeldenummer: 93909865.3
(22) Anmeldetag: 30.04.1993
(51) Int. Cl.: C09B 29/042, C09B 29/033, C09B 43/00

(54) **AZOFARBSTOFFE MIT EINER ACETALISIERTEN DIAZOKOMPONENTE AUS DER THIOPHEN- ODER THIAZOLREIHE**
AZO DYES WITH AN ACETALISED DIAZO COMPONENT FROM THE THIOPHENE O R THIAZOL SERIES
COLORANTS AZO QUES AVEC UN COMPOSANT DIAZO QUE ACETALISE DE LA SERIE DES THIOPHENES OU DES THIAZOLES

(30) Priorität: 12.05.1992 DE 4215495
(43) Veröffentlichungstag der Anmeldung: 01.03.1995
(73) Patentinhaber: BASF Aktiengesellschaft, 67063 Ludwigshafen (DE)
(72) Erfinder: GRUETTNER-MERTEN, Sabine, D-64625 Bensheim (DE); REICHELT, Helmut, D-6730 Neustadt (DE); LANGE, Arno, D-6702 Bad Duerkheim (DE); DEGEN, Helmut, D-6710 Frankenthal (DE)
(86) Internationale Anmeldenummer: EP9301043
(87) Internationale Veröffentlichungsnummer: WO9323479

(56) Entgegenhaltungen:
- EP-A- 0 201 896
- DE-A- 3 906 066
- FR-A- 2 388 860
- GB-A- 2 071 684
- GB-A- 2 163 768
- Houben-Weyl, Band E 14a/1

## Beschreibung

Die vorliegende Erfindung betrifft neue Azofarbstoffe der Formel I 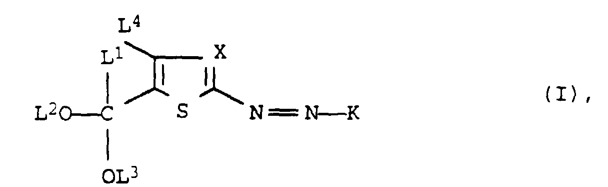 in der
- L¹: Wasserstoff, C₁-C₈-Alkyl oder Phenyl,
- L² und L³: gleich oder verschieden sind und unabhängig voneinander jeweils C₁-C₈-Alkyl, das gegebenenfalls substituiert ist und durch 1 oder 2 Sauerstoffatome in Etherfunktion unterbrochen sein kann, oder L² und L³ zusammen einen Rest der Formel 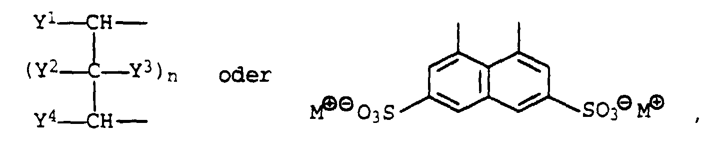 worin n für 0, 1 oder 2, Y¹ und Y⁴ gleich oder verschieden sind und unabhängig voneinander jeweils für Wasserstoff, Hydroxymethyl, 1,2-Dihydroxyethyl oder einen Rest der Formel COO^{⊖}M^{⊕} oder SO₃ ^{⊖}M^{⊕}, Y² und Y³ gleich oder verschieden sind und unabhängig voneinander jeweils für Wasserstoff oder Hydroxymethyl und M^{⊕} für das Äquivalent eines Kations stehen,
- L⁴: Wasserstoff, C₁-C₈-Alkyl, das durch 1 oder 2 Sauerstoffatome in Etherfunktion unterbrochen sein kann und gegebenenfalls substituiert ist, gegebenenfalls substituiertes Phenyl, Halogen, C₁-C₈-Alkoxy, gegebenenfalls substituiertes Phenoxy, C₁-C₈-Alkylthio, C₁-C₈-Alkylsulfonyl, gegebenenfalls substituiertes Phenylthio, gegebenenfalls substituiertes Phenylsulfonyl, C₁-C₈-Alkoxycarbonyl, C₃-C₆-Alkenyloxycarbonyl oder Phenoxycarbonyl,
- X: Stickstoff oder den Rest C-L⁵, worin L⁵ für Cyano, C₁-C₈-Alkoxycarbonyl, C₃-C₆-Alkenyloxycarbonyl, Phenoxycarbonyl, C₁-C₈-Alkanoyl, Benzoyl, Carbamoyl, C₁-C₄-Mono- oder Dialkylcarbamoyl, Phenylcarbamoyl, C₁-C₈-Alkylsulfonyl oder gegebenenfalls substituiertes Phenylsulfonyl steht, und
- K: den Rest einer Kupplungskomponente bedeuten,
neue Kristallmodifikationen von Thienylazobenzolfarbstoffen sowie die Verwendung der genannten Farbstoffe zum Färben oder Bedrucken von textilen Materialien.

Aus der DE-A-3 529 831, GB-A-2 071 684, DE-A-2 818 101, EP-A-362 637, DE-A-3 906 066, EP-A-201 896 sowie der EP-A-390 666 sind Azofarbstoffe bekannt, die denen der Formel I ähnlich sind. Sie verfügen über eine Carbonylgruppe in Ringposition 5 des Thiophen- oder Thiazolrings. Es hat sich gezeigt, daß die Löslichkeit dieser Farbstoffe noch nicht optimal ist. Außerdem ist auch ihr anwendungstechnisches Eigenschaftsprofil nicht in allen Punkten zufriedenstellend.

Aufgabe der vorliegenden Erfindung war es nun, neue Azofarbstoffe bereitzustellen, die die obengenannten Mängel nicht mehr aufweisen.

Demgemäß wurden die eingangs näher bezeichneten Azofarbstoffe der Formel I gefunden.

In den Azofarbstoffen der Formel I kann K beispielsweise den Rest einer Kupplungskomponente aus der Anilin-, Aminothiazol-, Pyrazol-, Diaminopyridin-, Hydroxypyridon- oder Chinolinreihe bedeuten.

Hervorzuheben sind Azofarbstoffe der Formel I, in der K einen Rest der Formel 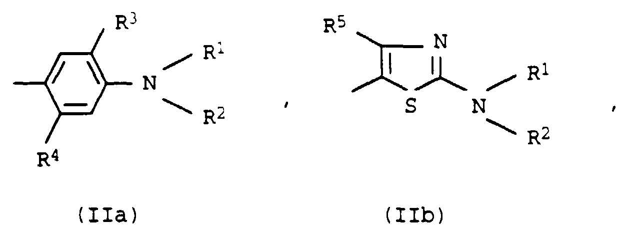 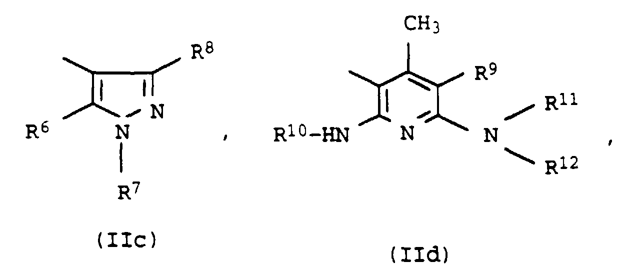 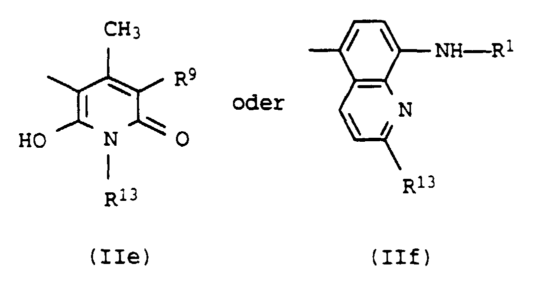 bedeutet, worin
- R¹ und R²: gleich oder verschieden sind und unabhängig voneinander jeweils für Wasserstoff, gegebenenfalls substituiertes C₁-C₈-Alkyl, das durch 1 oder 2 Sauerstoffatome in Etherfunktion unterbrochen sein kann, C₅-C₇-Cycloalkyl oder C₃-C₆-Alkenyl, das gegebenenfalls durch Halogen, dabei insbesondere durch Chlor oder Brom, substituiert ist,
- R³: für Wasserstoff, C₁-C₈-Alkyl oder C₁-C₈-Alkoxy,
- R⁴: für Wasserstoff, C₁-C₈-Alkyl, C₁-C₈-Alkoxy, C₁-C₈-Alkylsulfonylamino, gegebenenfalls substituiertes C₁-C₈-Alkanoylamino oder Benzoylamino,
- R⁵: für Wasserstoff, C₁-C₈-Alkyl, gegebenenfalls substituiertes Phenyl oder Thienyl,
- R⁶: für Amino oder Hydroxy,
- R⁷: für C₁-C₈-Alkyl, das durch 1 oder 2 Sauerstoffatome in Etherfunktion unterbrochen sein kann, Benzyl, C₅-C₇-Cycloalkyl, C₃-C₆-Alkenyl oder gegebenenfalls substituiertes Phenyl,
- R⁸: für Wasserstoff oder C₁-C₈-Alkyl,
- R⁹: für Cyano, Carbamoyl oder Acetyl,
- R¹⁰, R¹¹ und R¹²: gleich oder verschieden sind und unabhängig voneinander jeweils für gegebenenfalls substituiertes C₁-C₈-Alkyl, das durch 1 oder 2 Sauerstoffatome in Etherfunktion unterbrochen sein kann, C₅-C₇-Cycloalkyl, gegebenenfalls substituiertes Phenyl, C₃-C₆-Alkenyl, gegebenenfalls substituiertes Benzoyl, C₁-C₈-Alkanoyl, C₁-C₈-Alkylsulfonyl oder gegebenenfalls substituiertes Phenylsulfonyl oder R¹¹ und R¹² zusammen mit dem sie verbindenden Stickstoffatom für einen 5- oder 6-gliedrigen gesättigten heterocyclischen Rest, der gegebenenfalls weitere Heteroatome enthält, und
- R¹³: für Wasserstoff oder C₁-C₈-Alkyl stehen.

Alle in den obengenannten Formeln auftretenden Alkyl- und Alkenylgruppen können sowohl geradkettig als auch verzweigt sein.

Wenn in den obengenannten Formeln substituierte Phenylgruppen auftreten, können als Substituenten z.B. C₁-C₄-Alkyl, Chlor, Brom, Nitro, C₁-C₄-Alkoxy, C₁-C₄-Alkoxycarbonyl, Carboxyl oder Hydroxysulfonyl in Betracht kommen. Die Phenylreste weisen dabei in der Regel 1 bis 3 Substituenten auf.

Wenn in den obengenannten Formeln substituierte Alkylgruppen auftreten, können als Substituenten z.B. Hydroxy, Halogen, Cyclohexyloxy, Phenoxy, C₁-C₄-Alkanoyloxy, C₁-C₄-Alkoxycarbonyl, C₁-C₄-Alkoxy-C₁-C₄-alkoxycarbonyl, C₁-C₄-Alkanoyloxy, Hydroxysulfonyl, Cyano, Cyclohexyl oder gegebenenfalls substituiertes Phenyl in Betracht kommen. Die Alkylreste weisen dabei in der Regel 1 bis 3 Substituenten auf.

Reste L¹, L², L³, L⁴, R¹, R², R³, R⁴, R⁵, R⁷, R⁸, R¹⁰, R¹¹, R¹² und R¹³ sind z.B. Methyl, Ethyl, Propyl, Isopropyl, Butyl, Isobutyl, sec-Butyl, Pentyl, Isopentyl, Neopentyl, tert-Pentyl, Hexyl, 2-Methylpentyl, Heptyl, Octyl, Isooctyl oder 2-Ethylhexyl.

Reste L⁴ sind weiterhin z.B. Methylthio, Ethylthio, Propylthio, Isopropylthio, Butylthio, Isobutylthio, Pentylthio, Hexylthio, Heptylthio, Octylthio, 2-Ethylhexylthio, Phenylthio, 2-Methylphenylthio, 2-Methoxyphenylthio, 2-Chlorphenylthio, Fluor, Chlor, Brom, Phenoxy, 2-Methylphenoxy, 2-Methoxyphenoxy, 2-Chlorphenoxy, Phenyl, 2-, 3- oder 4-Methylphenyl, 2,4-Dimethylphenyl, 2-, 3- oder 4-Methoxyphenyl, 2-, 3- oder 4-Chlorphenyl oder 2-, 3- oder 4-Methoxyphenyl.

Reste L⁴, R³ und R⁴ sind weiterhin z.B. Methoxy, Ethoxy, Propoxy, Isopropoxy, Butoxy, Isobutoxy, sec-Butoxy, Pentyloxy, Isopentyloxy, Neopentyloxy, tert-Pentyloxy, Hexyloxy, 2-Methylpentyloxy, Heptyloxy, Octyloxy, Isooctyloxy oder 2-Ethylhexyloxy.

Reste L¹⁵ sind, wie weiterhin auch Reste L⁴, R¹⁰, R¹¹ und R¹², z.B. Methylsulfonyl, Ethylsulfonyl, Propylsulfonyl, Isopropylsulfonyl, Butylsulfonyl, Isobutylsulfonyl sec-Butylsulfonyl, Pentylsulfonyl, Isopentylsulfonyl, Neopentylsulfonyl, Hexylsulfonyl, Heptylsulfonyl, Octylsulfonyl, 2-Ethylhexylsulfonyl, Phenylsulfonyl, 2-Methylphenylsulfonyl, 2-Methoxyphenylsulfonyl oder 2-Chlorphenylsulfonyl.

Reste L⁴ und L⁵ sind weiterhin z.B. Methoxycarbonyl, Ethoxycarbonyl, Propoxycarbonyl, Isopropoxycarbonyl, Butoxycarbonyl, Isobutoxycarbonyl, sec-Butoxycarbonyl, Pentyloxycarbonyl, Isopentyloxycarbonyl, Hexyloxycarbonyl, Heptyloxycarbonyl, Octyloxycarbonyl, 2-Ethylhexyloxycarbonyl, Prop-2-en-1-yloxycarbonyl, 2-Methylprop-2-en-1-yloxycarbonyl, But-2-en-1-yloxycarbonyl oder But-3-en-1-yloxycarbonyl.

Reste R¹, R², R¹¹, R¹² und R¹³ sind weiterhin z.B. Cyclopentyl, Cyclohexyl oder Cycloheptyl.

Reste L⁵ sind weiterhin z.B. Formyl, Acetyl, Propionyl, Butyryl, Pentanoyl, Hexanoyl, Heptanoyl, Octanoyl, 2-Ethylhexanoyl, Mono- oder Dimethylcarbamoyl, Mono- oder Diethylcarbamoyl, Mono- oder Dipropylcarbamoyl, Mono- oder Diisopropylcarbamoyl Mono- oder Dibutylcarbamoyl oder N-Methyl-N-ethylcarbamoyl.

Reste L¹, L², L⁴, R¹, R², R¹⁰, R¹¹ und R¹² sind weiterhin z.B. 2-Methoxyethyl, 2-Ethoxyethyl, 2-Propoxyethyl, 2-Isopropoxyethyl, 2-Butoxyethyl, 2-Isobutoxyethyl, 2- oder 3-Methoxypropyl, 1-Methoxyprop-2-yl, 2- oder 3-Ethoxypropyl oder 2- oder 3-Propoxypropyl, 3,6-Dioxaheptyl, 3,6-Dioxaoctyl, 4,7-Dioxaoctyl, 4,7-Dioxanonyl, 4,8-Dioxydecyl, 2-Hydroxyethyl, 2- oder 3-Hydroxypropyl, 1-Hydroxyprop-2-yl, 2- oder 4-Hydroxybutyl, 3-Hydroxybut-2-yl, Trifluormethyl, 2-Chlorethyl, 2- oder 3-Chlorpropyl, 2-Cyclohexyloxyethyl, 2- oder 3-Cyclohexyloxypropyl, 2- oder 4-Cyclohexyloxybutyl, 2-Phenoxyethyl, 2-Phenoxypropyl, 3-Phenoxypropyl, 4-Phenoxybutyl, 2-Formyloxyethyl, 2-Acetyloxyethyl, 2-Propionyloxyethyl, 2- oder 3-Acetyloxypropyl, 2- oder 4-Acetyloxybutyl, 2-Methoxycarbonylethyl, 2-Ethoxycarbonylethyl, 2- oder 3-Methoxycarbonylpropyl, 2- oder 3-Ethoxycarbonylpropyl, 2- oder 3-Butoxycarbonylpropyl, 4-Methoxycarbonylbutyl, 4-Ethoxycarbonylbutyl, 2-Cyanoethyl, 2- oder 3-Cyanopropyl, 4-Cyanobutyl, 2-Cyclohexylethyl, 2- oder 3-Cyclohexylpropyl, 2-Hydroxysulfonylethyl, 2- oder 3-Hydroxysulfonylpropyl, Benzyl, 1- oder 2-Phenylethyl, Carboxybenzyl, 1- oder 2-Carboxyphenylethyl, Hydroxysulfonylbenzyl, 1- oder 2-Hydroxysulfonylphenylethyl, Methoxycarbonylbenzyl, 1- oder 2-Methoxycarbonylphenylethyl, 2-Acetyloxyethyl, 2-Propionyloxyethyl, 2- oder 3-Acetyloxypropyl, Prop-2-en-1-yl, 2-Methylprop-2-en-1-yl, But-2-en-1-yl, But-3-en-1-yl oder 3-Chlorprop-2-en-1-yl.

Wenn die Reste R¹¹ und R¹² zusammen mit dem sie verbindenden Stickstoffatom einen fünf- oder sechsgliedrigen gesättigten heterocyclischen Rest, der gegebenenfalls weitere Heteroatome enthält, bedeuten, so kommen dafür z.B. Pyrrolidinyl, Piperidinyl, Morpholinyl, Thiomorpholinyl, Thiomorpholinyl-S,S-dioxid, Piperazinyl oder N-(C₁-C₄-Alkyl)piperazinyl, wie N-Methyl- oder N-Ethylpiperazinyl, in Betracht.

Wenn L² und L³ zusammen den Rest der Formel 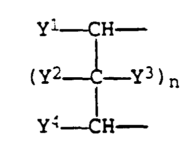 bedeuten, so können dafür beispielsweise folgende Reste in Betracht kommen: 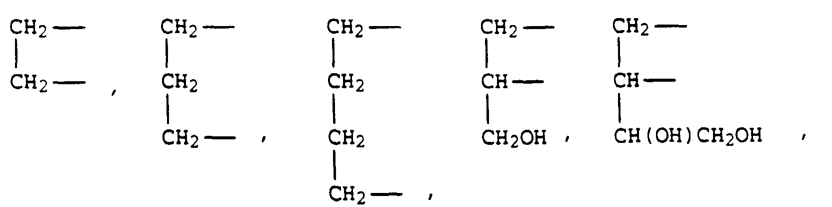 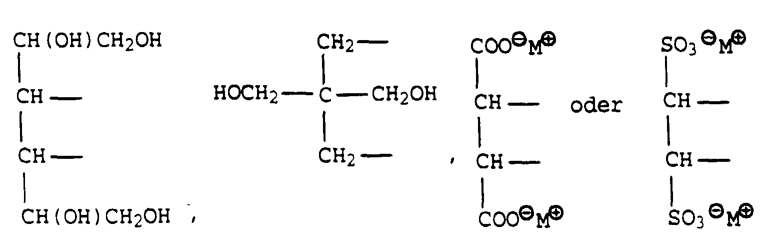 M^{⊕} bedeutet das Äquivalent eines Kations. Als Kationen kommen dabei Metallionen in Betracht. Metallionen sind insbesondere die Lithium-, Natrium- oder Kaliumionen.

Hervorzuheben sind dabei Natrium- oder Kaliumionen, wobei Natriumionen besondere Bedeutung zukommt.

Bevorzugt sind Azofarbstoffe der Formel I, in der
- L¹: Wasserstoff oder C₁-C₈-Alkyl,
- L⁴: gegebenenfalls substituiertes Phenyl, Halogen oder C₁-C₈-Alkoxy und
- X: Stickstoff oder den Rest C-L⁵, worin L⁵ für Cyano oder C₁-C₈-Alkoxycarbonyl steht, bedeuten.

Bevorzugt sind weiterhin Azofarbstoffe der Formel I, in der L² und L³ unabhängig voneinander jeweils gegebenenfalls durch Hydroxy substituiertes C₁-C₈-Alkyl oder L² und L³ zusammen einen Rest der Formel 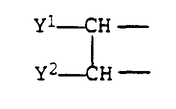 bedeuten, worin Y¹ und Y² jeweils die obengenannte Bedeutung besitzen.

Bevorzugt sind weiterhin Azofarbstoffe der Formel I, in der K den Rest einer Diazokomponente aus der Anilinreihe, insbesondere einen Rest der Formel IIa bedeutet.

Besonders bevorzugt sind Azofarbstoffe der Formel I, in der
- L¹: Wasserstoff oder C₁-C₄-Alkyl,
- L⁴: Chlor, Brom oder C₁-C₄-Alkoxy und
- X: Stickstoff oder den Rest C-L⁵, worin L⁵ für Cyano oder C₁-C₄-Alkoxycarbonyl steht, bedeuten.

Besonders bevorzugt sind weiterhin Azofarbstoffe der Formel I, in der
L² und L³ unabhängig voneinander jeweils C₁-C₄-Alkyl oder L² und L³ zusammen einen Rest der Formel 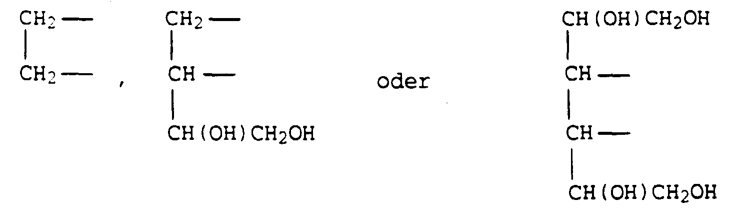 bedeuten.

Besonders bevorzugt sind weiterhin Azofarbstoffe der Formel I, in der K einen Rest der Formel IIa bedeutet, worin
- R¹ und R²: unabhängig voneinander jeweils C₁-C₄-Alkyl, das gegebenenfalls durch 1 Sauerstoffatom in Etherfunktion unterbrochen ist und durch Hydroxy, Cyano oder C₁-C₄-Alkanoyloxy substituiert sein kann, C₃-C₄-Alkenyl, das gegebenenfalls durch Chlor substituiert ist, oder R¹ auch Wasserstoff,
- R³: Wasserstoff und
- R⁴: C₁-C₄-Alkanoylamino, dessen Alkylkette gegebenenfalls durch ein Sauerstoffatom in Etherfunktion unterbrochen ist, bedeuten.

Ganz besonders hervorzuheben sind Azofarbstoffe der Formel Ia 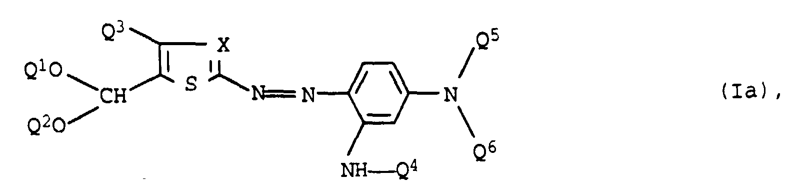 in der
- Q¹ und Q²: unabhängig voneinander jeweils C₁-C₄-Alkyl oder einen Rest der Formel 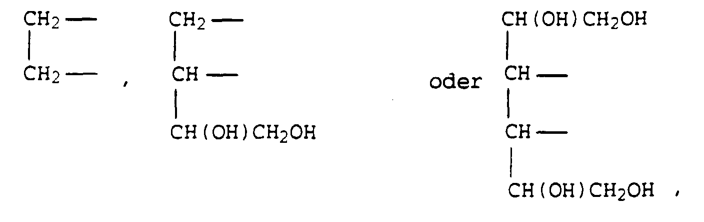
- Q³: Chlor,
- X: Stickstoff oder den Rest C-CN,
- Q⁴: Acetyl, Propionyl oder Methoxyacetyl und
- Q⁵ und Q⁶: unabhängig voneinander jeweils C₁-C₄-Alkyl, das gegebenenfalls durch ein Sauerstoffatom in Etherfunktion unterbrochen ist und durch Hydroxy, Cyano oder Acetyloxy substituiert sein kann, Prop-2-en-1-yl oder 3-Chlorprop-2-en-1-yl oder Q⁵ auch Wasserstoff bedeuten.

Die erfindungsgemäßen Farbstoffe der Formel I können nach an sich bekannten Methoden erhalten werden. Beispielsweise kann man einen Carbonylazofarbstoff der Formel IV 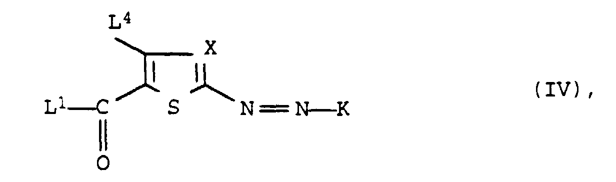 in der L¹, L⁴, X und K jeweils die obengenannte Bedeutung besitzen, mit einer Hydroxyverbindung der Formel Va, Vb, Vc oder Vd 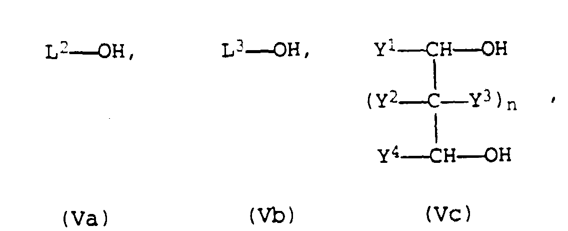 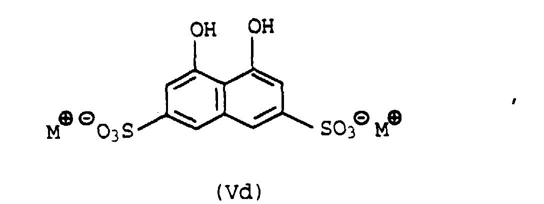 wobei L², L³, Y¹, Y², Y³, Y⁴, M^{⊕} und n jeweils die obengenannte Bedeutung besitzen, unter saurer Katalyse gegebenenfalls in Gegenwart eines inerten Lösungsmittels, z.B. Toluol, acetalisieren.

Diejenigen erfindungsgemäßen Azofarbstoffe der Formel I, die frei von Hydroxysulfonylgruppen sind, eignen sich als Dispersionsfarbstoffe vorteilhaft zum Färben oder Bedrucken von textilen Fasern oder Geweben, insbesondere von Polyestern, daneben auch von Fasern oder Geweben aus Celluloseestern oder Polyamiden oder Mischgeweben aus Polyester und Cellulosefasern.

um einen günstigen Farbaufbau zu erreichen, kann es in manchen Fällen von Vorteil sein, Mischungen der Farbstoffe der Formel I untereinander zum Färben zu verwenden.

Die neuen Azofarbstoffe zeichnen sich durch hohe Farbstärke, gute Echtheiten und brillante Farbtöne aus.

Die erfindungsgemäßen Azofarbstoffe eigenen sich weiterhin vorteilhaft für die thermische Übertragung von einem Träger auf ein mit Kunststoff beschichtetes Papier mittels einer Energiequelle (siehe z.B. EP-A-416 434).

Die acetalisierten Azofarbstoffe der Formel I können bei der Anwendung von sauren Färbeflotten auch vorteilhaft als Zwischenprodukte für das Färben von textilen Fasern oder Geweben mit den Carbonylazofarbstoffen der Formel IV verwendet werden.

In Gegenwart von Säure hydrolysiert nämlich in der wäßrigen Färbeflotte die Acetalgruppe des Farbstoffs I und es wird die Carbonylgruppe des Farbstoffs der Formel IV gebildet.

Diese Anwendung ist besonders vorteilhaft im Vergleich mit den Carbonylazofarbstoffen der Formel IV, da die neuen Farbstoffe der Formel I eine bessere Löslichkeit aufweisen und somit der Anteil an Dispergiermittel, das häufig biologisch schwer abbaubar ist, in der jeweiligen Farbstoffzubereitung deutlich verringert werden kann.

Es ist auch möglich, die neuen Farbstoffe der Formel I als Zwischenprodukte für die Reinigung der Carbonylazofarbstoffe der Formel IV zu verwenden, d.h. man acetalisiert einen Carbonylazofarbstoff IV und hydrolysiert in einem Folgeschritt anschließend die Acetalgruppe.

Diese Methode ist besonders günstig anzuwenden bei den Farbstoffen der Formel Ia. Man erhält auf diese Weise Farbstoffe, deren Ausfärbungen eine Brillanz aufweisen, die sonst nur mit Anthrachinonfarbstoffen erzielt wird.

Die vorliegende Erfindung betrifft weiterhin eine neue Kristallmodifikation der Farbstoffe der Formel IIIa, IIIb und IIIc 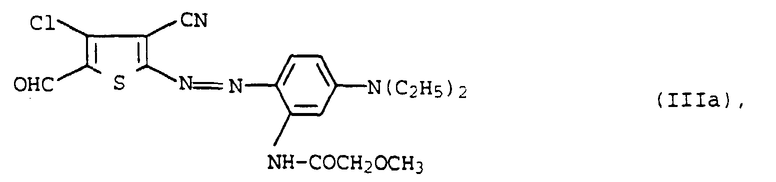 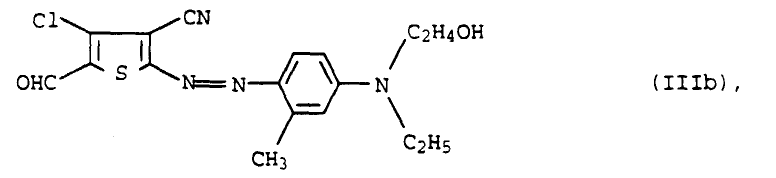 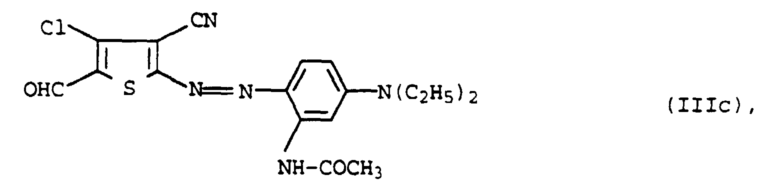 wobei die Kristallmodifikationen folgende Röntgenbeugungsdiagramme (Cu-K_{α}-Strahlung) aufweisen:
IIIa)
   Linien starker Intensität bei Beugungswinkel Θ [°] von 8,497 und 9,175;
      Linien mittlerer Intensität bei Beugungswinkel Θ [°] von 7,018, 11,836 und 9,721;
   Linien schwacher Intensität bei Beugungswinkel Θ [°] von 25,164, 5,920, 25,934, 24,425, 23,442, 26,335, 13,119, 17,906, 15,674, 13,963, 15,153, 27,471, 14,630, 17,028, 18,833, 20,982, 28,275, 21,247, 19,490, 29,898, 30,726 und 34,570;
IIIb)
   Linien starker Intensität bei Beugungswinkel Θ [°] von 24,971 und 12,551;
      Linien mittlerer Intensität bei Beugungswinkel Θ [°] von 22,850 und 11,093;
   Linien schwacher Intensität bei Beugungswinkel Θ [°] von 11,548, 9,100, 27,564, 29,233, 17,967, 7,424, 22,255, 30,296, 28,175, 13,645, 14,406, 17,368, 26,458, 16,018, 16,809, 19,206, 20,006, 32,464, 34,775, 33,479 und 33,833;
IIIc)
   Linien starker Intensität bei Beugungswinkel Θ [°] von 7,441;
   Linien mittlerer Intensität bei Beugungswinkel Θ [°] von 11,090;
   Linien schwacher Intensität bei Beugungswinkel Θ [°] von 8,662, 10,063, 26,181, 17,373, 19,540, 22,901, 14,950, 12,888, 14,097, 15,961, 28,237, 27,752, 29,035, 32,108, 34,326, 33,239 und 33,543.

Die bislang bekannten Kristallmodifikationen der Farbstoffe IIIa, IIIb und IIIc weisen folgende Röntgenbeugungsdiagramme (Cu-K_{α}-Strahlung) auf:
IIIa)
   Linien starker Intensität bei Beugungswinkel Θ [°] von 7,472;
   Linien mittlerer Intensität bei Beugungswinkel Θ [°] von 25,805 und 9,085;
   Linien schwacher Intensität bei Beugungswinkel Θ [°] von 11,884, 12,523, 10,798, 5,911, 17,383, 15,967, 23,471, 28,185, 21,610, 28,487, 19,189, 29,894, 20,509 und 32,133;
IIIb)
   Linien starker Intensität bei Beugungswinkel Θ [°] von 12,051;
   Linien mittlerer Intensität bei Beugungswinkel Θ [°] von 9,100, 24,408, 25,772, 7,406, 13,393, 28,145, 8,194, 6,922 und 6,435;
   Linien schwacher Intensität bei Beugungswinkel Θ [°] von 20,626, 14,420, 15,198, 21,433, 16,128, 17,635, 18,236, 30,787, 31,882, 33,865 und 34,834;
IIIc)
   Linien starker Intensität bei Beugungswinkel Θ [°] von 26,470, 9,671, 11,277 und 25,759;
   Linien mittlerer Intensität bei Beugungswinkel Θ [°] von 7,341, 8,449, 7,750, 10,755, 14,441, 24,870 und 27,019;
   Linien schwacher Intensität bei Beugungswinkel Θ [°] von 12,715, 23,160, 21,288, 16,613, 21,531, 17,954, 22,268, 21,872, 19,583, 30,530, 32,342 und 32,958.

Für die Aufnahme der Röntgenbeugungsdiagramme wurde jeweils ein Pulverdifraktometer der Firma Siemens vom Typ D 5000 verwendet.

Die neue Kristallmodifikation der Farbstoffe IIIa, IIIb und IIIc führt bei deren Anwendung beim Färben von textilen Fasern oder Geweben zu Färbungen mit sehr hoher Brillanz.

Die folgenden Beispiele sollen die Erfindung naher erläutern.

### Beispiel 1

240 g der Verbindung der Formel 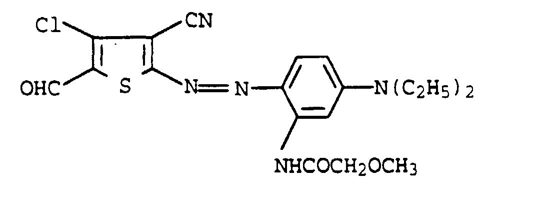 wurden in 2 1 Methanol 8 Stunden unter Rückfluß erhitzt. Dann kühlte man ab, saugte den Niederschlag ab und trocknete ihn unter vermindertem Druck. Den so erhaltenen Farbstoff der Formel 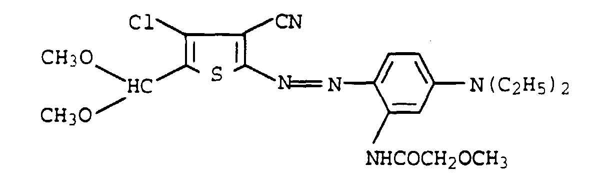 kristallisierte man aus 1 l Toluol um.
Ausbeute: 160 g; Schmelzpunkt: 138°C; λₘₐₓ (in Aceton): 562 nm (ε=55000).

### Beispiel 2

20 g der Verbindung der Formel 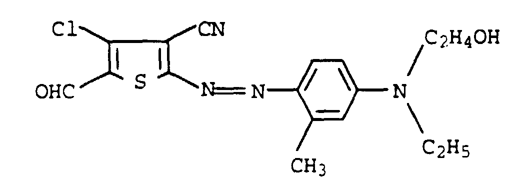 wurden in 500 ml Methanol 4 Stunden unter Rückfluß erhitzt. Dann ließ man abkühlen, saugte bei Raumtemperatur vom Rückstand ab und versetzte das Filtrat mit 100 ml Wasser. Der als Niederschlag anfallende Farbstoff der Formel 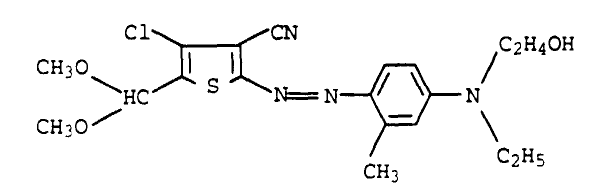 wurde abgesaugt und getrocknet.
Ausbeute: 18,2 g; Schmelzpunkt: 140°C; λₘₐₓ (in Aceton): 551 nm (ε=46000).

### Beispiel 3

7,5 g der Verbindung der Formel 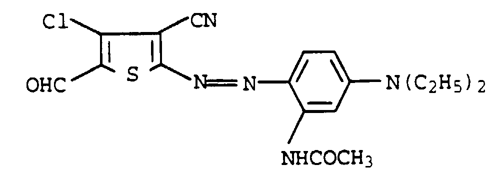 wurden in 250 ml Toluol, 5,4 g Ethylenglykol und 2 Tropfen Phosphorsäure 5 Stunden unter Rückfluß erhitzt. Das Reaktionsgemisch wurde dann heiß filtriert und das Filtrat abgekühlt. Der als Niederschlag anfallende Farbstoff der Formel 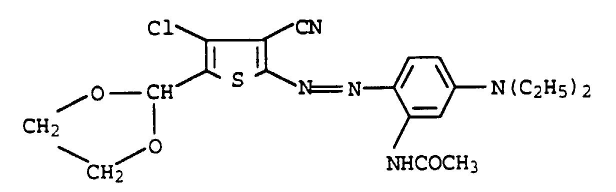 wurde abgesaugt und getrocknet.
Ausbeute: 3,4 g; Schmelzpunkt: 181°C; λₘₐₓ (in Aceton): 555 nm (ε=56000).

In analoger Weise werden die in den Tabellen 1 bis 6 aufgeführten Farbstoffe erhalten. Dabei gelten folgende Abkürzungen:
Me = Methyl
Et = Ethyl
Pr = Propyl
Ac = Acetyl

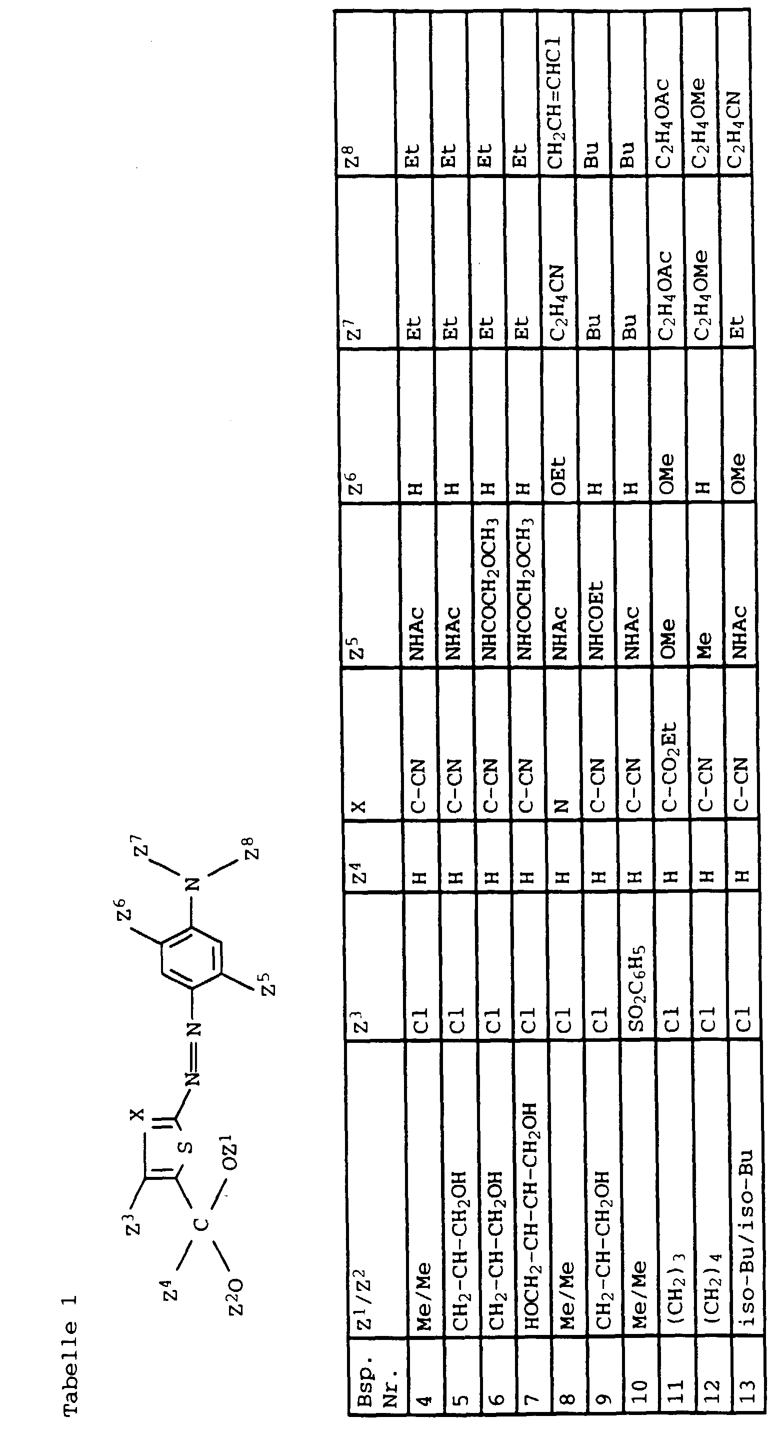

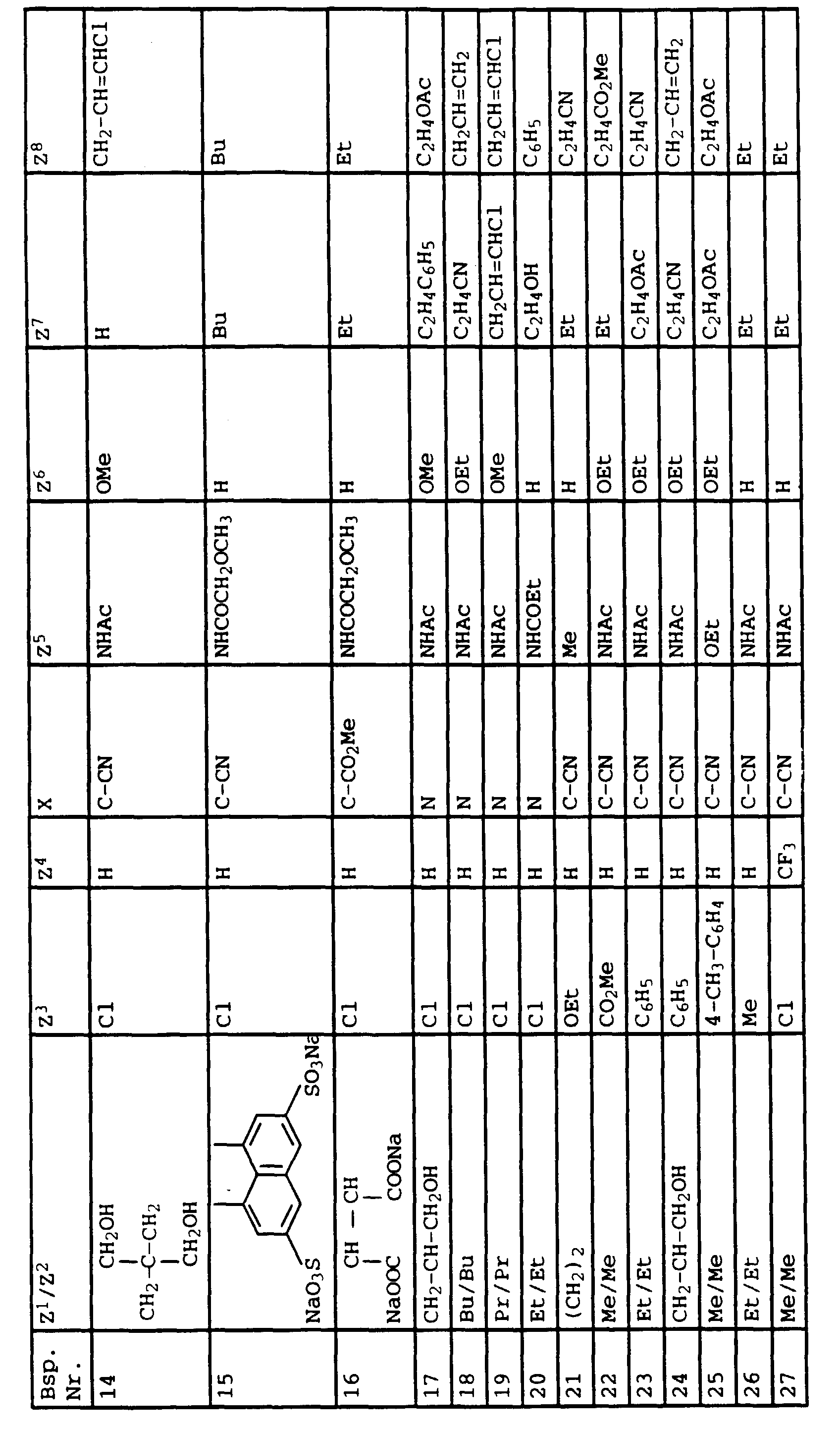

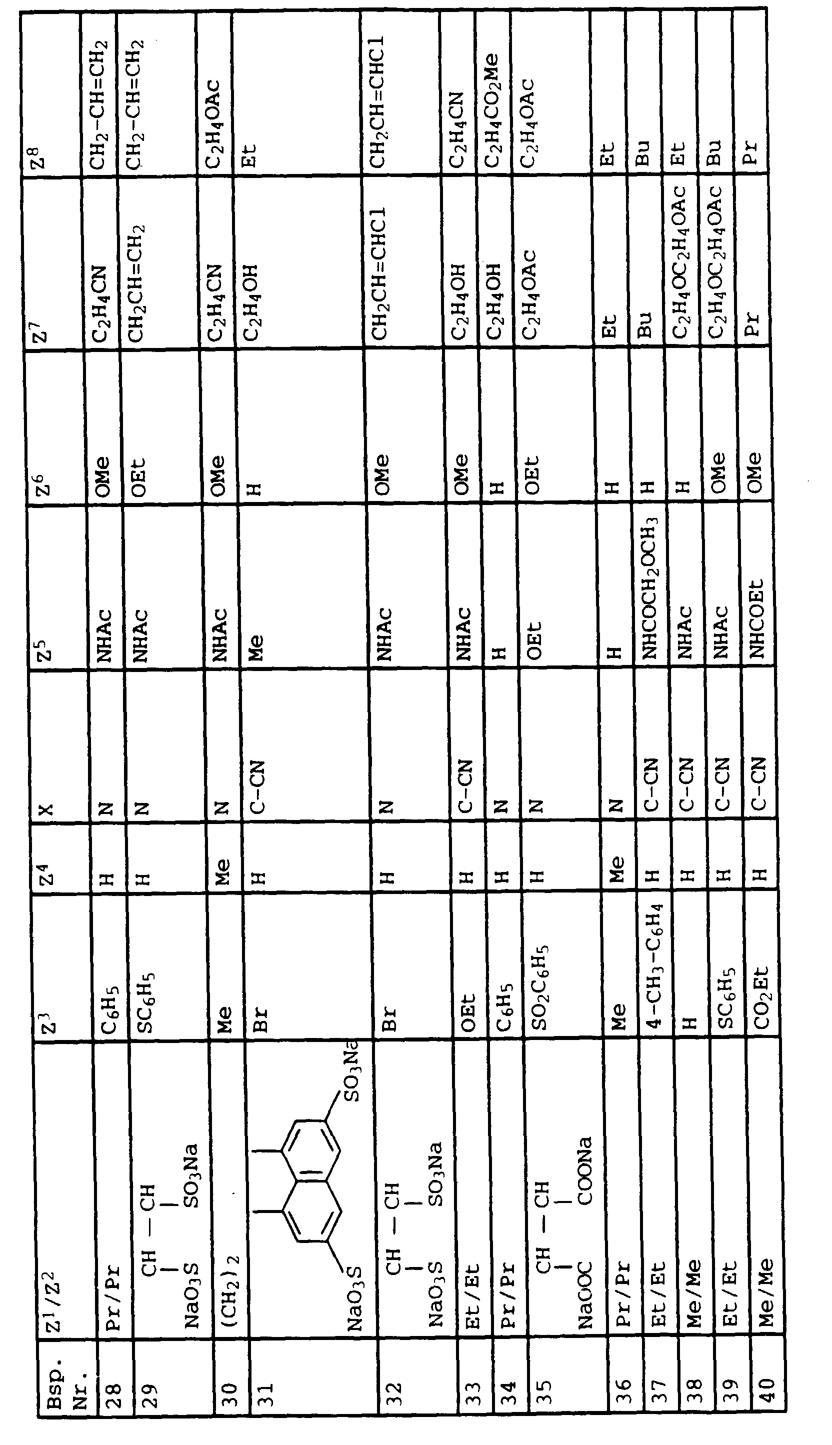

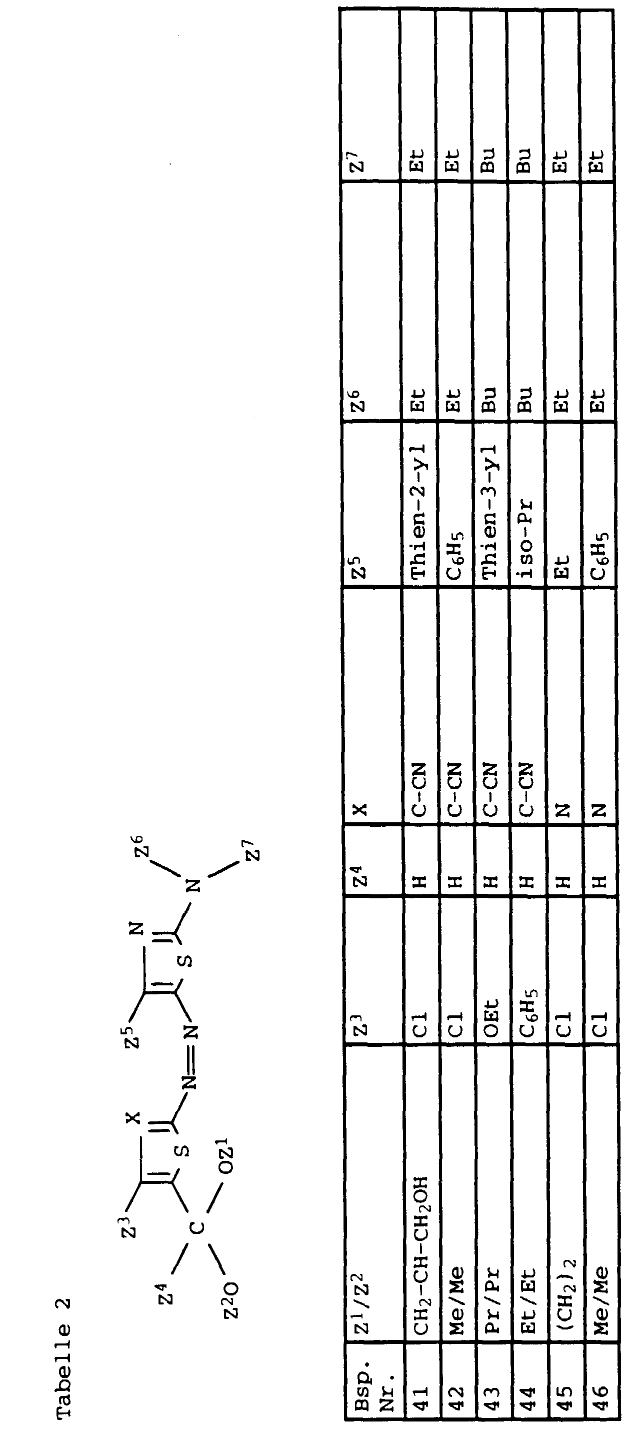

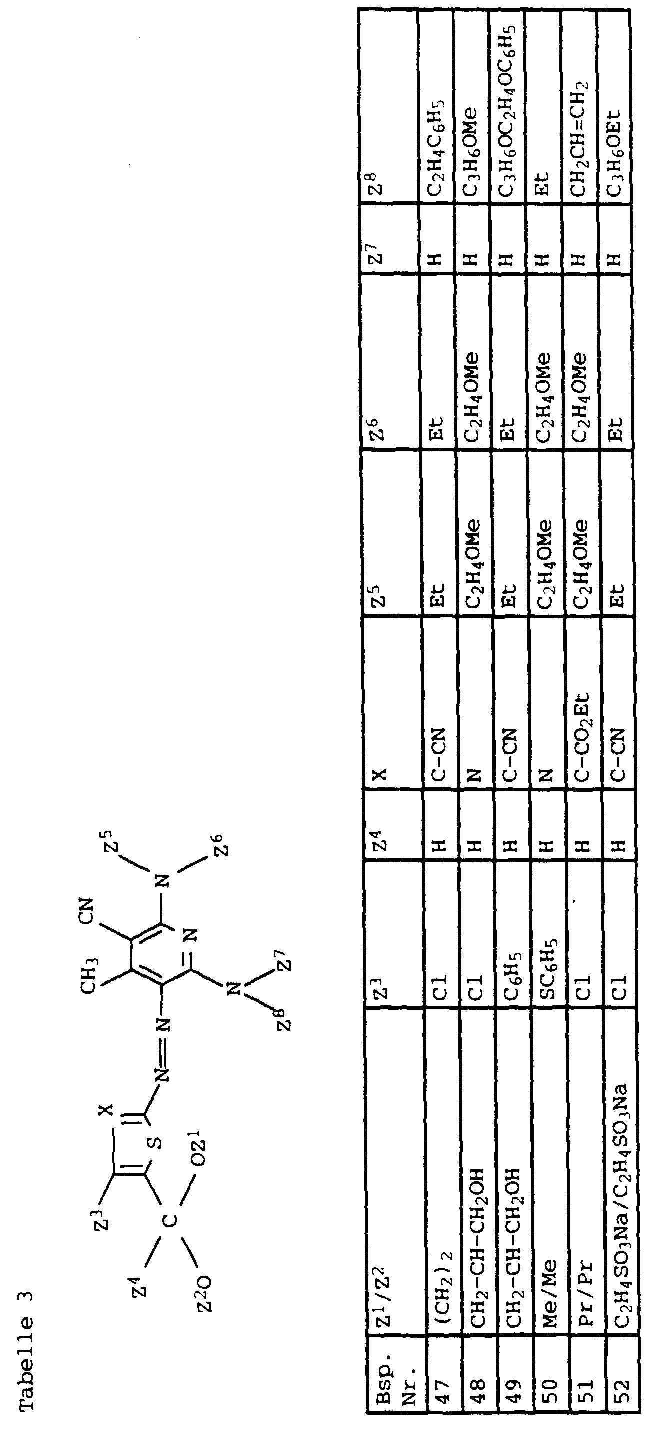

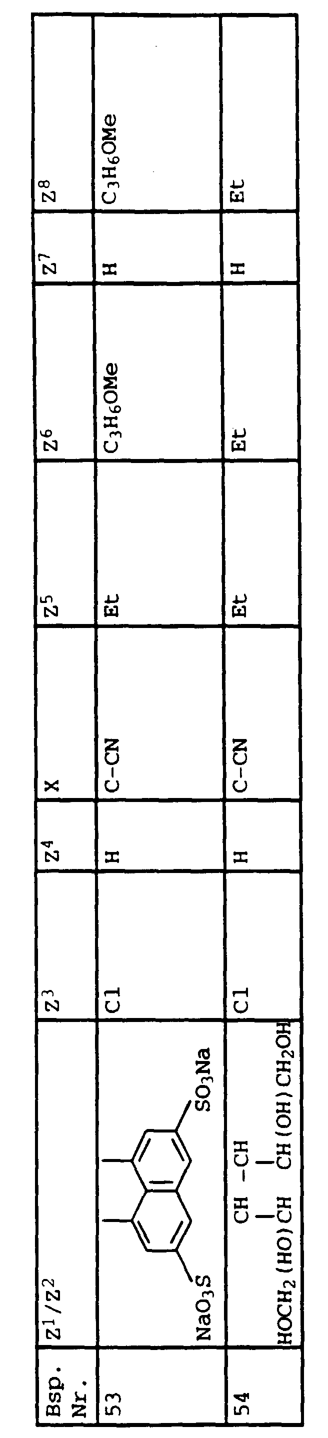

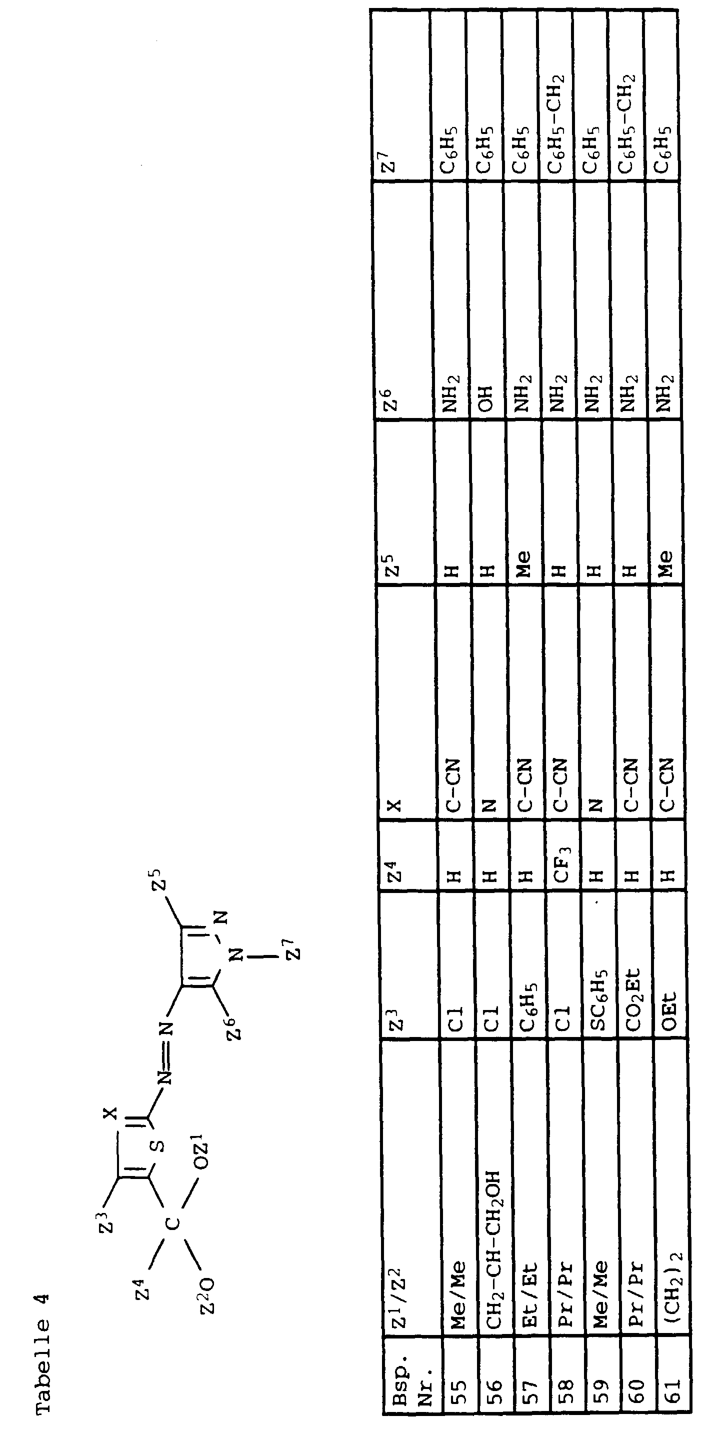

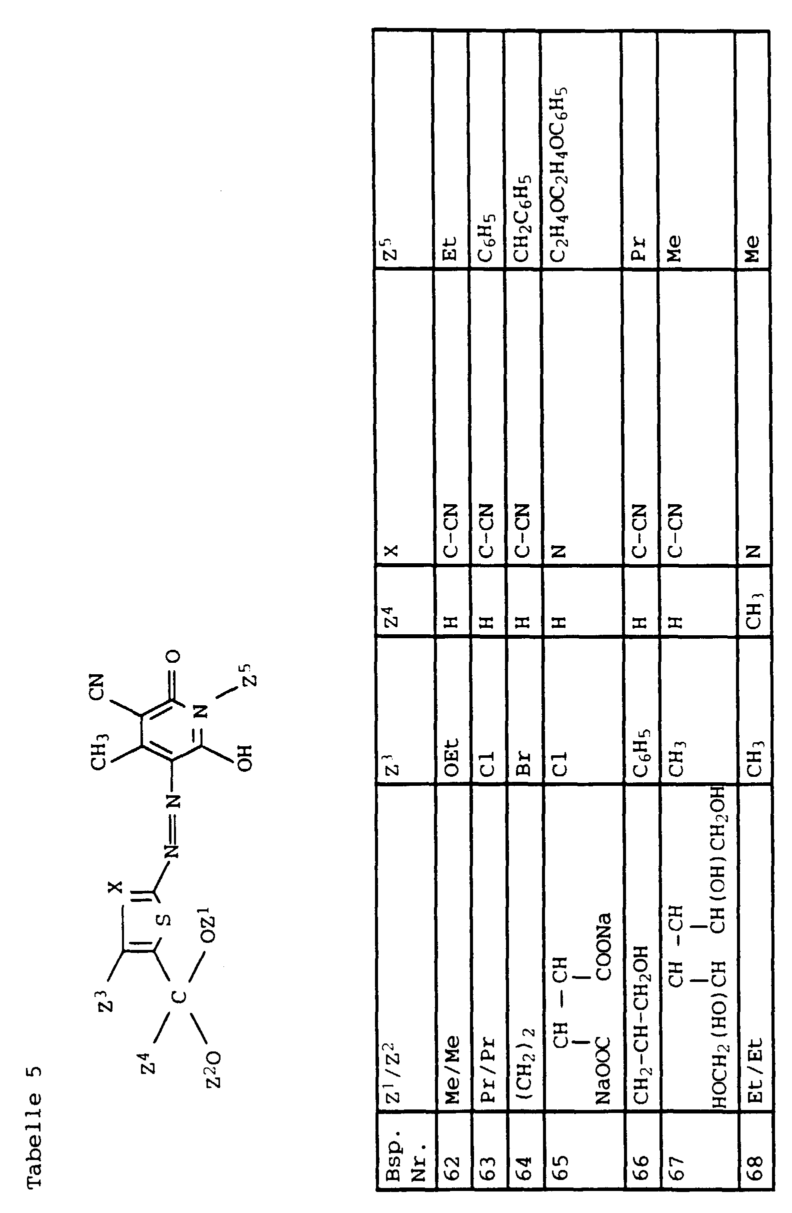

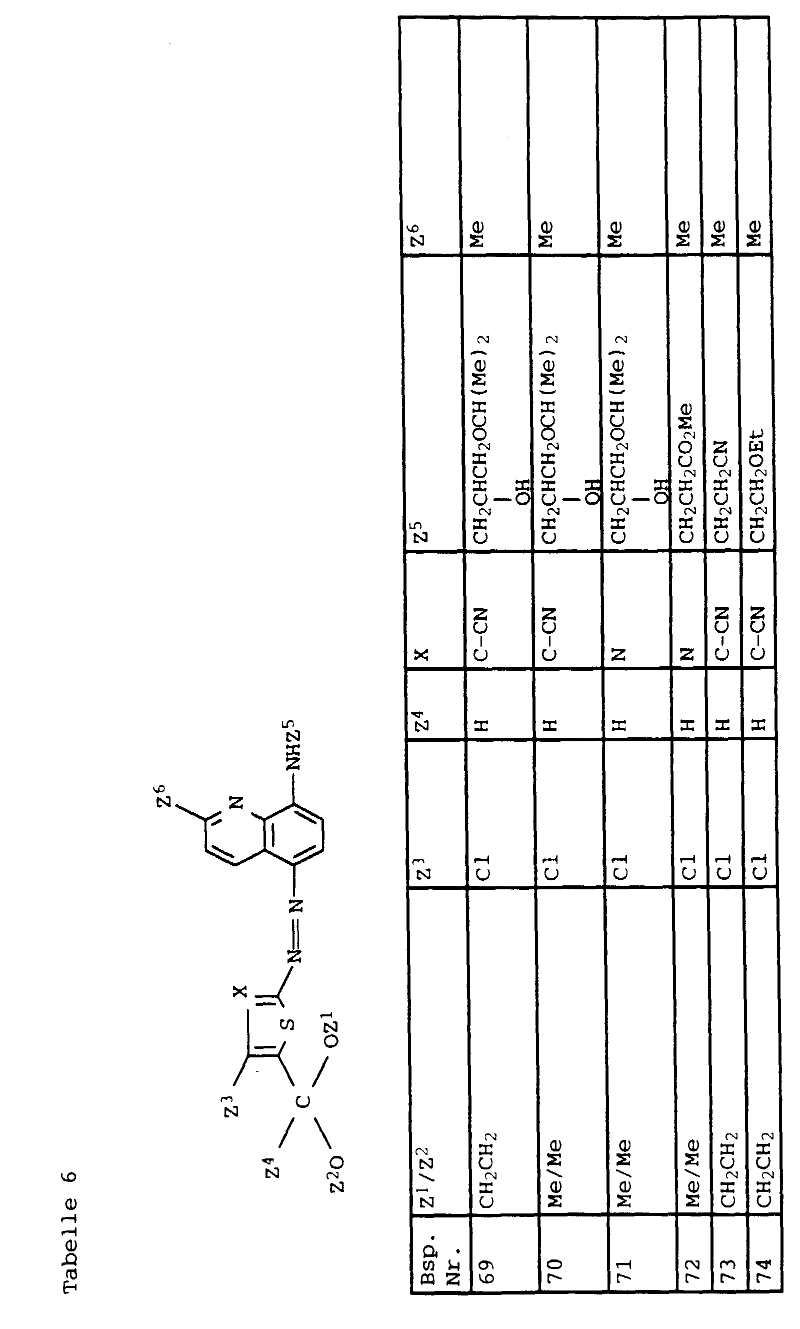

### Beispiel 75

10 g des Farbstoffs aus Beispiel 1 wurden mit 20 ml Tetrahydrofuran und 100 ml 10 gew.-%iger Schwefelsäure unter Erwärmen auf 60°C 1 Stunde lang gerührt. Dann wurde mit Eis abgekühlt, abgesaugt und unter vermindertem Druck getrocknet.

Man erhielt 9,5 g des Farbstoffs der Formel 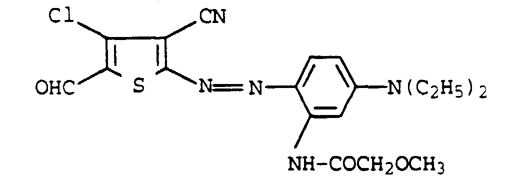 in einer neuen Kristallmodifikation, die folgendes Röntgenbeugungsdiagramm aufweist:
Linien starker Intensität bei Beugungswinkel Θ [°] von 8,497 und 9,175;
Linien mittlerer Intensität bei Beugungswinkel Θ [°] von 7,018, 11,836 und 9,721;
Linien schwacher Intensität bei Beugungswinkel Θ [°] von 25,164, 5,920, 25,934, 24,425, 23,442, 26,335, 13,119, 17,906, 15,674, 13,963, 15,153, 27,471, 14,630, 17,028, 18,833, 20,982, 28,275, 21,247, 19,490, 29,898, 30,726 und 34,570.

### Beispiel 76

10 g des Farbstoffs aus Beispiel 2 wurden mit 20 ml Tetrahydrofuran und 100 ml 10 gew.-%iger Schwefelsäure unter Erwärmen auf 60°C 1 Stunde lang gerührt. Dann wurde mit Eis abgekühlt, abgesaugt und unter vermindertem Druck getrocknet.

Man erhielt 9,2 g des Farbstoffs der Formel 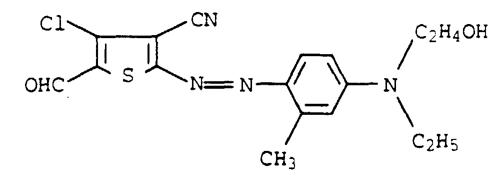 in einer neuen Kristallmodifikation, die folgendes Röntgenbeugungsdiagramm aufweist:
Linien starker Intensität bei Beugungswinkel Θ [°] von 24,971 und 12,551;
Linien mittlerer Intensität bei Beugungswinkel Θ [°] von 22,850 und 11,093;
Linien schwacher Intensität bei Beugungswinkel Θ [°] von 11,548, 9,100, 27,564, 29,233, 17,967, 7,424, 22,255, 30,296, 28,175, 13,645, 14,406, 17,368, 26,458, 16,018, 16,809, 19,206, 20,006, 32,464, 34,775, 33,479 und 33,833.

### Beispiel 77

10 g des Farbstoffs aus Beispiel 3 wurden mit 20 ml Tetrahydrofuran und 100 ml 10 gew.-%iger Schwefelsäure unter Erwärmen auf 60°C 1 Stunde gerührt. Dann wurde mit Eis abgekühlt, abgesaugt und unter vermindertem Druck getrocknet.

Man erhielt 9,7 g des Farbstoffs der Formel 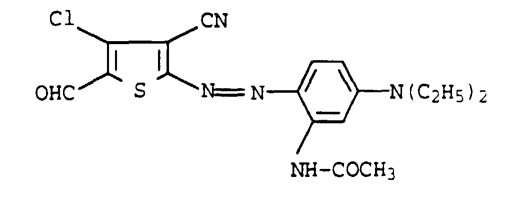 in einer neuen Kristallmodifikation, die folgendes Röntgen beugungsdiagramm aufweist:
Linien starker Intensität bei Beugungswinkel Θ [°] von 7,441;
Linien mittlerer Intensität bei Beugungswinkel Θ [°] von 11,090;
Linien schwacher Intensität bei Beugungswinkel Θ [°] von 8,662, 10,063, 26,181, 17,373, 19,540, 22,901, 14,950, 12,888, 14,097, 15,961, 28,237, 27,752, 29,035, 32,108, 34,326, 33,239 und 33,543.

## Patentansprüche

1. Azofarbstoffe der Formel I 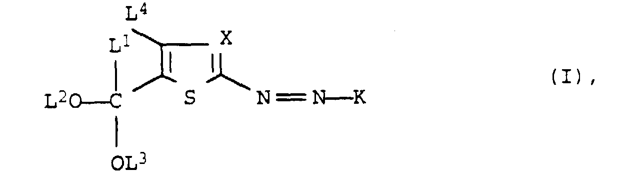 in der
L¹ Wasserstoff, C₁-C₈-Alkyl oder Phenyl,
L² und L³ gleich oder verschieden sind und unabhängig voneinander jeweils C₁-C₈-Alkyl, das gegebenenfalls substituiert ist und durch 1 oder 2 Sauerstoffatome in Etherfunktion unterbrochen sein kann, oder L² und L³ zusammen einen Rest der Formel 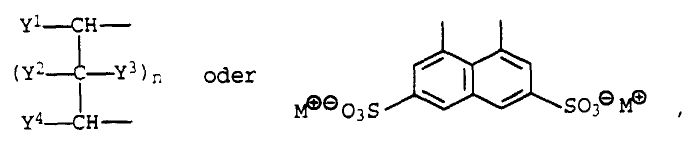 worin n für 0, 1 oder 2, Y¹ und Y⁴ gleich oder verschieden sind und unabhängig voneinander jeweils für Wasserstoff, Hydroxymethyl, 1,2-Dihydroxyethyl oder einen Rest der Formel COO^{⊖}M^{⊕} oder SO₃ ^{⊖}M^{⊕}, Y² und Y³ gleich oder verschieden sind und unabhängig voneinander jeweils für Wasserstoff oder Hydroxymethyl und M^{⊕} für das Äquivalent eines Kations stehen,
L⁴ Wasserstoff, C₁-C₈-Alkyl, das durch 1 oder 2 Sauerstoffatome in Etherfunktion unterbrochen sein kann und gegebenenfalls substituiert ist, gegebenenfalls substituiertes Phenyl, Halogen, C₁-C₈-Alkoxy, gegebenenfalls substituiertes Phenoxy, C₁-C₈-Alkylthio, C₁-C₈-Alkylsulfonyl, gegebenenfalls substituiertes Phenylthio, gegebenenfalls substituiertes Phenylsulfonyl, C₁-C₈-Alkoxycarbonyl, C₃-C₆-Alkenyloxycarbonyl oder Phenoxycarbonyl,
X Stickstoff oder den Rest C-L⁵, worin L⁵ für Cyano, C₁-C₈-Alkoxycarbonyl, C₃-C₆-Alkenyloxycarbonyl, Phenoxycarbonyl, C₁-C₈-Alkanoyl, Benzoyl, Carbamoyl, C₁-C₄-Mono- oder Dialkylcarbamoyl, Phenylcarbamoyl, C₁-C₈-Alkylsulfonyl oder gegebenenfalls substituiertes Phenylsulfonyl steht, und
K den Rest einer Kupplungskomponente bedeuten.

2. Azofarbstoffe nach Anspruch 1, dadurch gekennzeichnet, daß K den Rest einer Kupplungskomponente aus der Anilin-, Aminothiazol-, Pyrazol-, Diaminopyridin-, Hydroxypyridon- oder Chinolinreihe bedeutet.

3. Azofarbstoffe nach Anspruch 1, dadurch gekennzeichnet, daß
K einen Rest der Formel 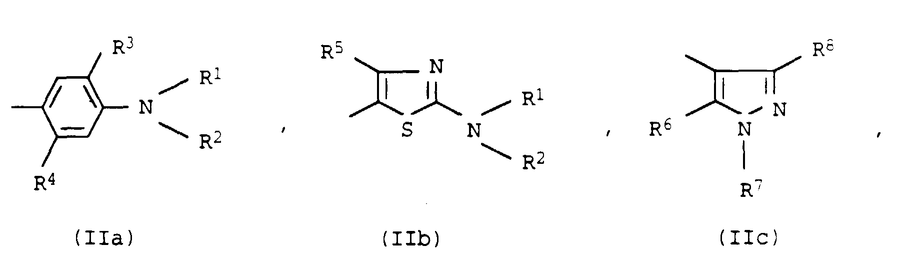 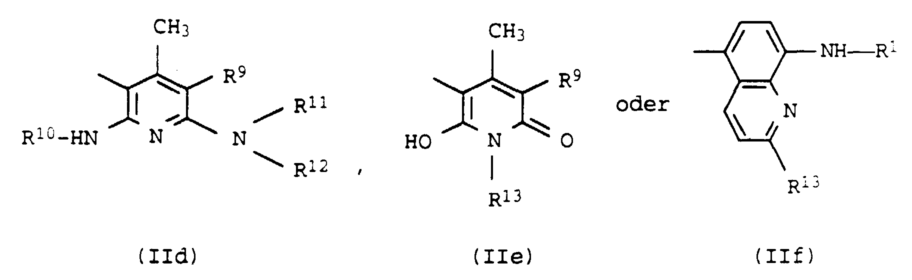
bedeutet, worin
R¹ und R² gleich oder verschieden sind und unabhängig voneinander jeweils für Wasserstoff, gegebenenfalls substituiertes C₁-C₈-Alkyl, das durch 1 oder 2 Sauerstoffatome in Etherfunktion unterbrochen sein kann, C₅-C₇-Cycloalkyl oder C₃-C₆-Alkenyl, das gegebenenfalls durch Halogen substituiert ist,
R³ für Wasserstoff, C₁-C₈-Alkyl oder C₁-C₈-Alkoxy,
R⁴ für Wasserstoff, C₁-C₈-Alkyl, C₁-C₈-Alkoxy, C₁-C₈-Alkylsulfonylamino, gegebenenfalls substituiertes C₁-C₈-Alkanoylamino oder Benzoylamino,
R⁵ für Wasserstoff, C₁-C₈-Alkyl, gegebenenfalls substituiertes Phenyl oder Thienyl,
R⁶ für Amino oder Hydroxy,
R⁷ für C₁-C₈-Alkyl, das durch 1 oder 2 Sauerstoffatome in Etherfunktion unterbrochen sein kann, Benzyl, C₅-C₇-Cycloalkyl, C₃-C₆-Alkenyl oder gegebenenfalls substituiertes Phenyl,
R⁸ für Wasserstoff oder C₁-C₈-Alkyl,
R⁹ für Cyano, Carbamoyl oder Acetyl,
R¹⁰, R¹¹ und R¹² gleich oder verschieden sind und unabhängig voneinander jeweils für gegebenenfalls substituiertes C₁-C₈-Alkyl, das durch 1 oder 2 Sauerstoffatome in Etherfunktion unterbrochen sein kann, C₅-C₇-Cycloalkyl, gegebenenfalls substituiertes Phenyl, C₃-C₆-Alkenyl, gegebenenfalls substituiertes Benzoyl, C₁-C₈-Alkanoyl, C₁-C₈-Alkylsulfonyl oder gegebenenfalls substituiertes Phenylsulfonyl oder R¹¹ und R¹² zusammen mit dem sie verbindenden Stickstoffatom für einen 5- oder 6-gliedrigen gesättigten heterocyclischen Rest, der gegebenenfalls weitere Heteroatome enthält, und
R¹³ für Wasserstoff oder C₁-C₈-Alkyl stehen.

4. Azofarbstoffe nach Anspruch 1, dadurch gekennzeichnet, daß
L¹ Wasserstoff oder C₁-C₈-Alkyl,
L⁴ gegebenenfalls substituiertes Phenyl, Halogen oder C₁-C₈-Alkoxy und
X Stickstoff oder den Rest C-L⁵, worin L⁵ für Cyano oder C₁-C₈-Alkoxycarbonyl steht, bedeuten.

5. Azofarbstoffe nach Anspruch 1, dadurch gekennzeichnet, daß L² und L³ unabhängig voneinander jeweils gegebenenfalls durch Hydroxy substituiertes C₁-C₈-Alkyl oder L² und L³ zusammen einen Rest der Formel 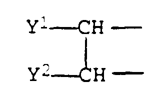 bedeuten, worin Y¹ und Y² jeweils die in Anspruch 1 genannte Bedeutung besitzen.

6. Verwendung der Azofarbstoffe gemäß Anspruch 1 zum Färben oder Bedrucken von textilen Fasern oder Geweben.

7. Neue Kristallmodifikation der Farbstoffe der Formel 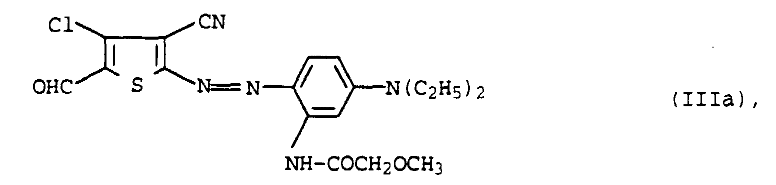 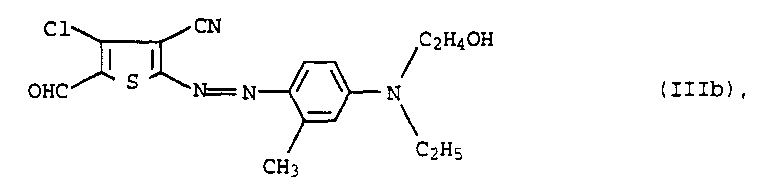 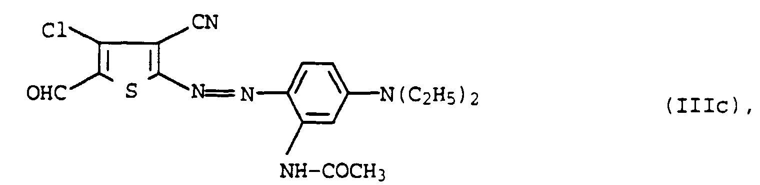 wobei die Kristallmodifikationen folgende Röntgenbeugungsdiagramme (Cu-K_{α}-Strahlung) aufweisen:
IIIa)
Linien starker Intensität bei Beugungswinkel Θ [°] von 8,497 und 9,175;
Linien mittlerer Intensität bei Beugungswinkel Θ [°] von 7,018, 11,836 und 9,721;
Linien schwacher Intensität bei Beugungswinkel Θ [°] von 25,164, 5,920, 25,934, 24,425, 23,442, 26,335, 13,119, 17,906, 15,674, 13,963, 15,153, 27,471, 14,630, 17,028, 18,833, 20,982, 28,275, 21,247, 19,490, 29,898, 30,726 und 34,570;
IIIb)
Linien starker Intensität bei Beugungswinkel Θ [°] von 24,971 und 12,551;
Linien mittlerer Intensität bei Beugungswinkel Θ [°] von 22,850 und 11,093;
Linien schwacher Intensität bei Beugungswinkel Θ [°] von 11,548, 9,100, 27,564, 29,233, 17,967, 7,424, 22,255, 30,296, 28,175, 13,645, 14,406, 17,368, 26,458, 16,018, 16,809, 19,206, 20,006, 32,464, 34,775, 33,479 und 33,833;
IIIc)
Linien starker Intensität bei Beugungswinkel Θ [°] von 7,441;
Linien mittlerer Intensität bei Beugungswinkel Θ [°] von 11,090;
Linien schwacher Intensität bei Beugungswinkel Θ [°] von 8,662, 10,063, 26,181, 17,373, 19,540, 22,901, 14,950, 12,888, 14,097, 15,961, 28,237, 27,752, 29,035, 32,108, 34,326, 33,239 und 33,543.

## Claims

1. Azo dyes of the formula I 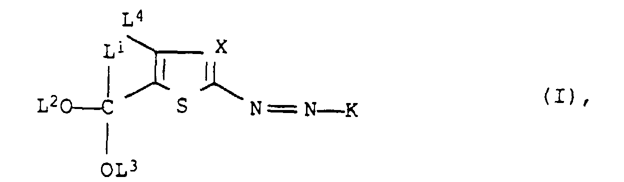 where
L¹ is hydrogen, C₁-C₈-alkyl or phenyl,
L² and L³ are identical or different and each is independently of the other C₁-C₈-alkyl, which may be substituted and may be interrupted by 1 or 2 oxygen atoms in ether function, or together are a radical of the formula 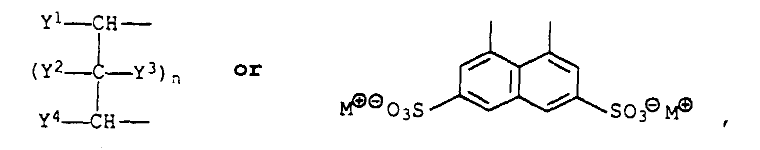
where n is 0, 1 or 2, Y¹ and Y⁴ are identical or different and each is independently of the other hydrogen, hydroxymethyl, 1,2-dihydroxyethyl or a radical of the formula COO^{⊖}M^{⊕} or SO₃ ^{⊖}M^{⊕}, Y² and Y³ are identical or different and are each independently of the other halogen or hydroxymethyl, and M^{⊕} is the equivalent of a cation,
L⁴ is hydrogen, C₁-C₈-alkyl, which may be interrupted by 1 or 2 oxygen atoms in ether function and may be substituted, substituted or unsubstituted phenyl, halogen, C₁-C₈-alkoxy, substituted or unsubstituted phenoxy, C₁-C₈-alkylthio, C₁-C₈-alkylsulfonyl, substituted or unsubstituted phenylthio, substituted or unsubstituted phenylsulfonyl, C₁-C₈-alkoxycarbonyl, C₃-C₆-alkenyloxycarbonyl or phenoxycarbonyl,
X is nitrogen or the radical C-L⁵, where L⁵ is cyano, C₁-C₈-alkoxycarbonyl, C₃-C₆-alkenyloxycarbonyl, phenoxycarbonyl, C₁-C₈-alkanoyl, benzoyl, carbamoyl, mono- or di(C₁-C₄-alkyl)carbamoyl, phenylcarbamoyl, C₁-C₈-alkylsulfonyl or substituted or unsubstituted phenylsulfonyl, and
K is the radical of a coupling component.

2. Azo dyes as claimed in claim 1, wherein K is the radical of a coupling component of the aniline, aminothiazole, pyrazole, diaminopyridine, hydroxypyridone or quinoline series.

3. Azo dyes as claimed in claim 1, wherein
K is a radical of the formula 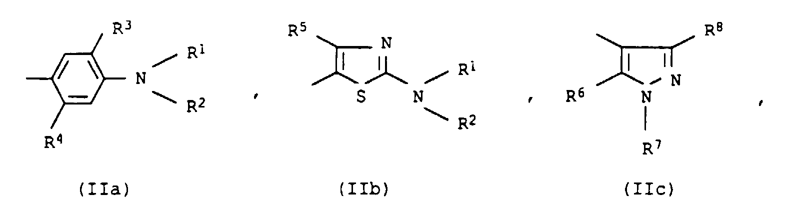 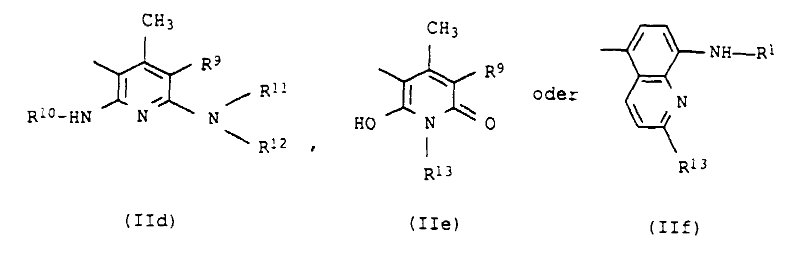
where
R¹ and R² are identical or different and each is independently of the other hydrogen, substituted or unsubstituted C₁-C₈-alkyl, which may be interrupted by 1 or 2 oxygen atoms in ether function, C₅-C₇-cycloalkyl or C₃-C₆-alkenyl, which may be substituted by halogen,
R³ is hydrogen, C₁-C₈-alkyl or C₁-C₈-alkoxy,
R⁴ is hydrogen, C₁-C₈-alkyl, C₁-C₈-alkoxy, C₁-C₈-alkylsulfonylamino, substituted or unsubstituted C₁-C₈-alkanoylamino or benzoylamino,
R⁵ is hydrogen, C₁-C₈-alkyl, substituted or unsubstituted phenyl ot thienyl,
R⁶ is amino or hydroxyl,
R⁷ is C₁-C₈-alkyl, which may be interrupted by 1 or 2 oxvaen atoms in ether function, benzyl, C₅-C₇-cycloalkyl, C₃-C₆-alkenyl or substituted or unsubstituted phenyl,
R⁸ is hydrogen or C₁-C₈-alkyl,
R⁹ is cyano, carbamoyl or acetyl,
R¹⁰, R¹¹ and R¹² are identical or different and each is independently of the others substituted or unsubstituted C₁-C₈-alkyl which may be interrupted by 1 or 2 oxygen atoms in ether function, C₅-C₇-cycloalkyl, substituted or unsubstituted phenyl, C₃-C₆-alkenyl, substituted or unsubstituted benzoyl, C₁-C₈-alkanoyl, C₁-C₈-alkylsulfonyl or substituted or unsubstituted phenylsulfonyl, or R¹¹ and R¹² are together with the nitrogen atom joining them together a 5- or 6-membered saturated heterocyclic radical, which may contain further hetero atoms, and
R¹³ is hydrogen or C₁-C₈-alkyl.

4. Azo dyes as claimed in claim 1, wherein
L¹ is hydrogen or C₁-C₈-alkyl,
L⁴ is substituted or unsubstituted phenyl, halogen or C₁-C₈-alkoxy, and
X is nitrogen or the radical C-L⁵, where L⁵ is cyano or C₁-C₈-alkoxycarbonyl.

5. Azo dyes as claimed in claim 1, wherein L² and L³ are each independently of the other unsubstituted or hydroxyl-substituted C₁-C₈-alkyl, or L² and L³ are together a radical of the formula 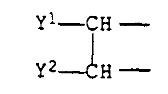 where Y¹ and Y² are each as defined in claim 1.

6. The use of the azo dyes of claim 1 for dyeing or printing textile fibers or fabrics.

7. A novel crystal form for each of the dyes of the formulae 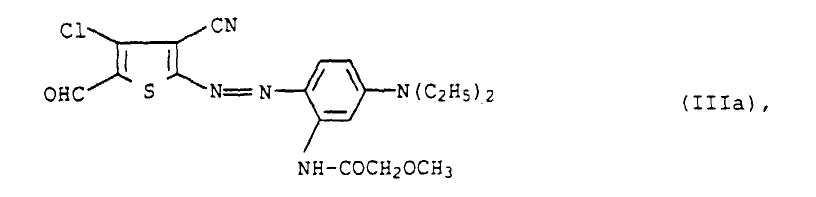 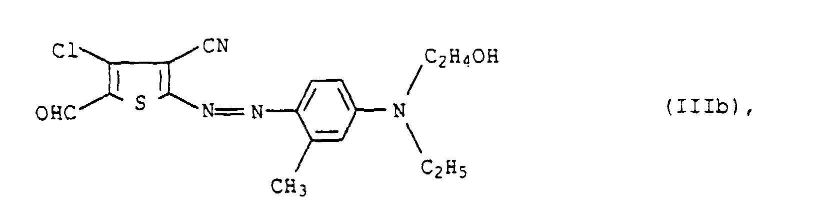 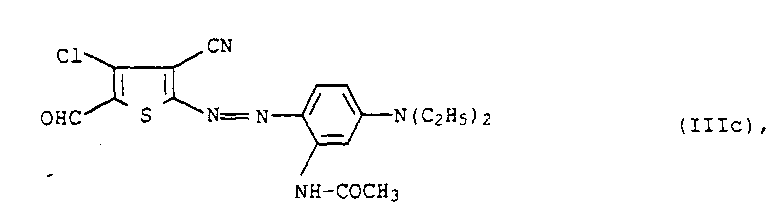 which crystal forms have the following X-ray diffraction diagrams (Cu-K_{α} radiation):
IIIa)
lines of high intensity at diffraction angles θ [°] of 8.497 and 9.175;
lines of medium intensity at diffraction angles θ [°] of 7.018, 11.836 and 9.721;
lines of low intensity at diffraction angles θ [°] of 25.164, 5.920, 25.934, 24.425, 23.442, 26.335, 13.119, 17.906, 15.674, 13.963, 15.153, 27.471, 14.630, 17.028, 18.833, 20.982, 28.275, 21.247, 19.490, 29.898, 30.726 and 34.570;
IIIb)
lines of high intensity at diffraction angles θ [°] of 24.971 and 12.551;
lines of medium intensity at diffraction angles θ [°] of 22.850 and 11.093;
lines of low intensity at diffraction angles θ [°] of 11.548, 9.100, 27.564, 29.233, 17.967, 7.424, 22.255, 30.296, 28.175, 13.645, 14.406, 17.368, 26.458, 16.018, 16.809, 19.206, 20.006, 32.464, 34.775, 33.479 and 33.833;
IIIc)
lines of high intensity at diffraction angles θ [°] of 7.441;
lines of medium intensity at diffraction angles θ [°] of 11.090;
lines of low intensity at diffraction angles θ [°] of 8.662, 10.063, 26.181, 17.373, 19.540, 22.901, 14.950, 12.888, 14.097, 15.961, 28.237, 27.752, 29.035, 32.108, 34.326, 33.239 and 33.543.

## Revendications

1. Colorants azoïques de formule I 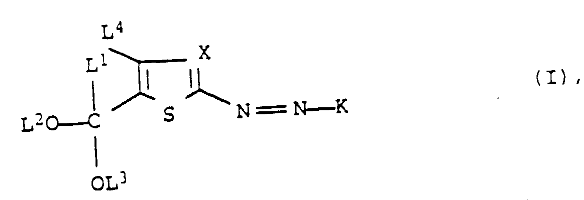 dans laquelle
L¹ représente un atome d'hydrogène ou un reste alkyle en C₁-C₈ ou phényle,
L² et L³ sont identiques ou différents et représentent chacun, indépendamment l'un de l'autre, un reste alkyle en C₁-C₈ qui est éventuellement substitué et peut être interrompu par 1 ou 2 atomes d'oxygène en fonction éther, ou L² et L³ forment ensemble un reste de formule 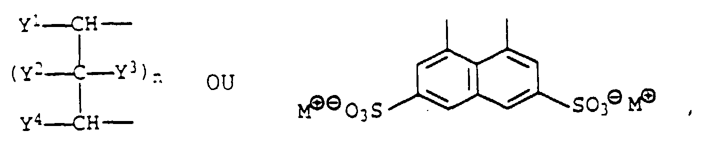 où n est mis pour 0, 1 ou 2, Y¹ et Y⁴ sont identiques ou différents et sont mis chacun, indépendamment l'un de l'autre, pour un atome d'hydrogène, un reste hydroxyméthyle, 1,2-dihydroxyéthyle ou un reste de formule COO⁻M^{⊕} ou SO₃ ^{⊖} M^{⊕} , Y² et Y³ sont identiques ou différents et sont mis chacun, indépendamment l'un de l'autre, pour un atome d'hydrogène ou un reste hydroxyméthyle et M^{⊕} est mis pour l'équivalent d'un cation,
L⁴ représente un atome d'hydrogène, un reste alkyle en C₁-C₈ qui peut être interrompu par 1 ou 2 atomes d'oxygène en fonction éther et est éventuellement substitué, un reste phényle éventuellement substitué, un atome d'halogène, un reste alcoxy en C₁-C₈, phénoxy éventuellement substitué, alkylthio en C₁-C₈, alkylsulfonyle en C₁-C₈, phénylthio éventuellement substitué, phénylsulfonyle éventuellement substitué, (alcoxy en C₁-C₈)carbonyle, (alcényloxy en C₃-C₆)carbonyle ou phénoxycarbonyle,
X représente un atome d'azote ou le reste C-L⁵, L⁵ étant mis pour un groupement cyano, (alcoxy en C₁-C₈)carbonyle, (alcényloxy en C₃-C₆)carbonyle, phénoxycarbonyle, alcanoyle en C₁-C₈, benzoyle, carbamoyle, mono- ou di(alkyl en C₁-C₄)carbamoyle, phénylcarbamoyle, alkylsulfonyle en C₁-C₈ ou phénylsulfonyle éventuellement substitué, et
K représente le reste d'un composant de copulation.

2. Colorants azoïques selon la revendication 1, caractérisés en ce que K représente le reste d'un composant de copulation de la série de l'aniline, de l'aminothiazole, du pyrazole, de la diaminopyridine, de l'hydroxypyridone ou de la quinoléine.

3. Colorants azoïques selon la revendication 1, caractérisés en ce que
K représente un reste de formule 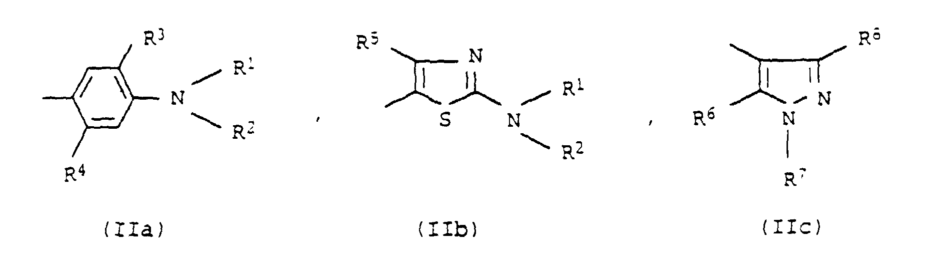 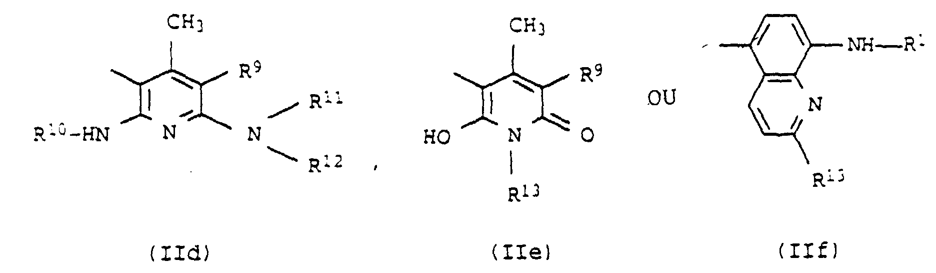
dans laquelle
R¹ et R² sont identiques ou différents et sont mis chacun, indépendamment l'un de l'autre, pour un atome d'hydrogène, un reste alkyle en C₁-C₈ éventuellement substitué qui peut être interrompu par 1 ou 2 atomes d'oxygène en fonction éther, un reste cycloalkyle en C₅-C₇ ou alcényle en C₃-C₆ qui est éventuellement substitué par un atome d'halogène,
R³ est mis pour un atome d'hydrogène, un reste alkyle en C₁-C₈ ou alcoxy en C₁-C₈,
R⁴ est mis pour un atome d'hydrogène, un reste alkyle en C₁-C₈, alcoxy en C₁-C₈, alkylsulfonylamino en C₁-C₈, alcanoylamino en C₁-C₈ éventuellement substitué ou benzoylamino,
R⁵ est mis pour un atome d'hydrogène, un reste alkyle en C₁-C₈, phényle éventuellement substitué ou thiényle,
R⁶ est mis pour un reste amino ou hydroxy,
R⁷ est mis pour un reste alkyle en C₁-C₈ qui peut être interrompu par 1 ou 2 atomes d'oxygène en fonction éther, benzyle, cycloalkyle en C₅-C₇, alcényle en C₃-C₆ ou phényle éventuellement substitué,
R⁸ est mis pour un atome d'hydrogène ou un reste alkyle en C₁-C₈,
R⁹ est mis pour un reste cyano, carbamoyle ou acétyle,
R¹⁰, R¹¹ et R¹² sont identiques ou différents et sont mis chacun, indépendamment les uns des autres, pour un reste alkyle en C₁-C₈ éventuellement substitué qui peut être interrompu par 1 ou 2 atomes d'oxygène en fonction éther, cycloalkyle en C₅-C₇, phényle éventuellement substitué, alcényle en C₃-C₆, benzoyle éventuellement substitué, alcanoyle en C₁-C₈, alkylsulfonyle en C₁-C₈ ou phénylsulfonyle éventuellement substitué, ou R¹¹ et R¹² sont mis ensemble, avec l'atome d'azote qui les relie, pour un reste hétérocyclique saturé à 5 ou 6 chaînons qui contient éventuellement d'autres hétéroatomes, et
R¹³ est mis pour un atome d'hydrogène ou un reste alkyle en C₁-C₈.

4. Colorants azoïques selon la revendication 1, caractérisés en ce que
L¹ représente un atome d'hydrogène ou un reste alkyle en C₁-C₈,
L⁴ représente un reste phényle éventuellement substitué, un atome d'halogène ou un reste alcoxy en C₁-C₈ et
X représente un atome d'azote ou le reste C-L⁵ dans lequel L⁵ est mis pour un groupement cyano ou (alcoxy en C₁-C₈)carbonyle.

5. Colorants azoïques selon la revendication 1, caractérisés en ce que L² et L³ représentent chacun, indépendamment l'un de l'autre, un reste alkyle en C₁-C₈ éventuellement substitué par un groupement hydroxy, ou L² et L³ représentent ensemble un reste de formule 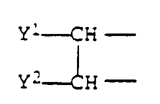 dans laquelle Y¹ et Y² ont chacun la signification donnée dans la revendication 1.

6. Utilisation des colorants azoïques selon la revendication 1 pour la teinture ou l'impression de fibres textiles ou de tissus.

7. Nouvelle variété cristalline des colorants de formule 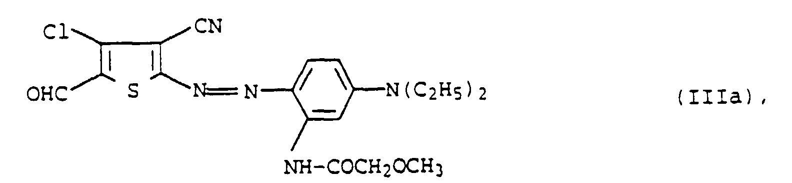 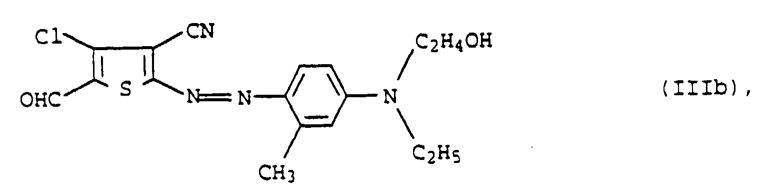 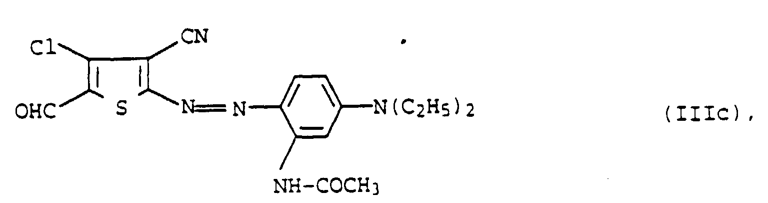 les variétés cristallines présentant les diagrammes suivants de diffraction des rayons X (raie K_{α} de Cu):
IIIa)
Lignes de plus forte intensité aux angles de diffraction θ (°) de 8,497 et 9,175;
Lignes d'intensité moyenne aux angles de diffraction θ (°) de 7,018, 11,836 et 9,721;
Lignes de plus faible intensité aux angles de diffraction θ (°) de 25,164, 5,920, 25,934, 24,425, 23,442, 26,335, 13,119, 17,906, 15,674, 13,963, 15,153, 27,471, 14,630, 17,028, 18,833, 20,982, 28,275, 21,247, 19,490, 29,898, 30,726 et 34,570;
IIIb)
Lignes de plus forte intensité aux angles de diffraction θ (°) de 24,971 et 12,551;
Lignes d'intensité moyenne aux angles de diffraction θ (°) de 22,850 et 11,093;
Lignes de plus faible intensité aux angles de diffraction θ (°) de 11,548, 9,100, 27,564, 29,233, 17,967, 7,424, 22,255, 30,296, 28,175, 13,645, 14,406, 17,368, 26,458, 16,018, 16,809, 19,206, 20,006, 32,464, 34,775, 33,479 et 33,833;
IIIc)
Lignes de plus forte intensité à l'angle de diffraction θ (°) de 7,441;
Lignes d'intensité moyenne à l'angle de diffraction θ (°) de 11,090;
Lignes de plus faible intensité aux angles de diffraction θ (°) de 8,662, 10,063, 26,181, 17,373, 19,540, 22,901, 14,950, 12,888, 14,097, 15,961, 28,237, 27,752, 29,035, 32,108, 34,326, 33,239 et 33,543.
